# DEMANDE DE BREVET EUROPEEN

(11) **EP 0 898 361 A1**
(43) Date de publication de la demande: **24.02.1999**
(21) Numéro de dépôt: 98402066.9
(22) Date de dépôt: 17.08.1998
(51) Int. Cl.: H02P 7/638

(54) **Système et procédé de régulation de vitesse pour moteur à excitation série, et moteur correspondant**

(30) Priorité: 18.08.1997 FR 9710445
(71) Demandeur: MOULINEX S.A., 75008 Paris (FR)
(72) Inventeur: Guinet, Michel, 14610 Cambes En Plaine (FR); Buffet, Eric, 14470 Courceulles Sur Mer (FR)
(74) Mandataire: Busquets, Jean-Pierre

(57) **Abrégé**

Système (1) pour réguler la vitesse d'un moteur (M) à excitation série comportant un enroulement d'induit (EI) et au moins un enroulement d'excitation (E1, E2) en série avec cet enroulement d'induit (EI), comprenant un module variateur de vitesse (TR) pour délivrer une tension unidirectionnelle réglable aux bornes du moteur (M) et un module de commande (CD) du module variateur (TR).

Ce système (1) comprend au moins une diode de roue libre (D1, D2) reliée en parallèle sur l'un au moins des enroulements d'excitation (E1, E2), et le module de commande (CD) est agencé pour traiter une force contre-électromotrice générée aux bornes du moteur (M) par la circulation d'un courant dans la diode de roue libre (D1, D2) dans des séquences d'annulation du courant dans l'enroulement d'induit (EI).

Utilisation notamment pour la régulation de vitesse des moteurs universels dans des appareils électroménagers et électrodomestiques.

## Description

La présente invention concerne un système de régulation de vitesse pour moteur à excitation série. Elle vise également un procédé mis en oeuvre dans ce système, ainsi qu'un moteur à excitation série correspondant.

Il s'agit ici de moteurs monophasés comportant un enroulement d'induit généralement rotorique et au moins un enroulement d'excitation généralement statorique. Ces moteurs sont pourvus d'un collecteur mécanique assurant l'alimentation de l'enroulement d'induit. Sont ici concernés les moteurs universels et les moteurs à courant continu à excitation série de faible puissance.

Pour faire varier la vitesse des moteurs universels, on utilise généralement de petits variateurs électroniques qui permettent de modifier la tension moyenne ou efficace aux bornes du moteur, comme le décrit par exemple le document FR 2 576 468.

La plupart de ces variateurs mettent en oeuvre un interrupteur de puissance de type triac ou thyristor directement connecté en série avec le moteur.

Dans un moteur universel en rotation, on peut observer, dans les plages temporelles où il n'est pas alimenté, une tension résiduelle à ses bornes qui est due aux effets de rémanence magnétique du moteur. Bien que très faible (quelques volts), cette tension est proportionnelle à la vitesse et peut être utilisée pour réaliser un asservissement de vitesse à faible coût. C'est ce principe qui est appliqué dans les variateurs à thyristor très fréquemment employés dans le domaine du petit électroménager. Ce type de variateur économique à thyristor présente cependant plusieurs inconvénients:
- il consomme un courant unidirectionnel (une alternance secteur sur deux), ce qui rend dissymétrique le courant absorbé sur le secteur;
- la puissance maximum du moteur ne peut être atteinte qu'en court-circuitant le thyristor de manière à alimenter le moteur avec toute la tension secteur (et non pas seulement avec une alternance secteur sur deux), ce qui empêche un contrôle progressif de la puissance du moteur à forte puissance.
- la tension résiduelle précitée est relativement faible et sujette à dispersion d'un moteur à l'autre, ce qui complique l'obtention de vitesses répétitives et stables sans adaptation particulière de celle-ci à chaque moteur.

En utilisant un variateur à triac, on peut réaliser un asservissement de vitesse économique sur des moteurs tels que des moteurs à courant continu à aimant qui présentent une force contre-électromotrice importante (plusieurs dizaines ou centaines de volt), ce qui n'est pas le cas des moteurs universels traditionnels.

On connaît aussi, par le document US 3 809 984, un système de régulation de vitesse pour un moteur alternatif à excitation série dans lequel on capte le courant d'induit décroissant lorsque le moteur est déconnecté de la source de tension d'alimentation pour déterminer l'instant suivant d'amorçage d'un triac. Ce système implique la mise en oeuvre d'un amplificateur linéaire pour traiter des impulsions de tension résiduelle de faible amplitude dues aux commutations internes au moteur lorsque celui-ci est déconnecté de la source de tension alternative et représentatives de sa vitesse.

Le but de la présente invention est de proposer un système de régulation de vitesse approprié pour des moteurs à excitation série ne présentant pas intrinsèquement des forces contre-électromotrices significatives, en particulier pour des moteurs universels.

Cet objectif est atteint avec un système pour réguler la vitesse d'un moteur à excitation série comportant un enroulement d'induit et au moins un enroulement d'excitation en série avec cet enroulement d'induit, ce système comprenant des moyens variateurs de vitesse pour délivrer une tension réglable aux bornes du moteur et des moyens pour commander ces moyens variateurs.

Suivant l'invention, les moyens variateurs de vitesse sont agencés pour délivrer un courant unidirectionnel réglable et le système régulateur comprend en outre au moins une diode de roue libre reliée en parallèle sur l'un au moins des enroulements d'excitation du moteur, les moyens de commande étant agencés pour traiter la force contre-électromotrice générée aux bornes du moteur par la circulation d'un courant dans la diode de roue libre pendant des séquences d'annulation du courant injecté dans l'enroulement d'induit du moteur.

Ainsi, en adjoignant à un moteur à excitation série tel qu'un moteur universel un dispositif lui permettant de générer une force contre-électromotrice de valeur élevée quand il n'est pas alimenté, il devient alors possible de mettre en oeuvre des régulateurs de vitesse économiques et robustes jusque là surtout réservés à des moteurs de type moteur à courant continu à aimant.

Dans le cas d'un système régulateur dans lequel les moyens variateurs comprennent des moyens interrupteurs commandés en aval d'une source de tension alternative et des moyens de redressement double alternance, les moyens de commande sont agencés pour déclencher les moyens interrupteurs commandés suivant un angle d'amorçage déterminé en fonction d'une consigne de vitesse et de l'amplitude de la force contre-électromotrice générée aux bornes du moteur dans les séquences d'annulation de courant d'induit correspondant aux séquences d'annulation du courant secteur.

Lorsque les moyens de commande sont prévus pour générer une commande d'amorçage retardée en fonction d'une consigne de réglage de vitesse et de la tension aux bornes desdits moyens interrupteurs commandés, on peut avantageusement prévoir que les moyens redresseurs soient agencés pour appliquer aux bornes des moyens interrupteurs commandés à l'état bloqué une tension sensiblement égale à la différence entre la tension d'alimentation et la force contre-électromotrice générée aux bornes du moteur.

Dans une forme de réalisation préférée d'un système régulateur de vitesse selon l'invention, les moyens de commande comprennent en outre des moyens pour régler le gain de régulation de la vitesse du moteurs.

Par ailleurs, afin de satisfaire les normes actuelles de compatibilité électromagnétique, on peut avantageusement associer au système régulateur de vitesse selon l'invention des moyens de filtrage CEM.

De plus, lorsqu'il est nécessaire de prévoir un freinage du moteur, le système régulateur de vitesse selon l'invention peut en outre comprendre des moyens pour connecter l'un des enroulements d'excitation, soit dans un premier état "moteur" dans lequel l'enroulement d'excitation est normalement connecté en série avec l'enroulement d'induit du moteur, soit dans un second état "frein" dans lequel cet enroulement d'excitation est connecté en parallèle sur l'enroulement d'induit du moteur qui est déconnecté des moyens redresseurs.

Suivant un autre aspect de l'invention, il est proposé un procédé pour réguler la vitesse d'un moteur à excitation série comportant un enroulement d'induit et au moins un enroulement d'excitation en série avec cet enroulement d'induit, ce moteur étant alimenté par un courant unidirectionnel réglable avec des séquences à courant nul, mis en oeuvre dans le système régulateur de vitesse selon l'invention. Lors de chaque annulation du courant dans l'enroulement d'induit du moteur, l'un au moins des enroulements d'excitation est mis en court-circuit de sorte qu'une force contre-électromotrice est générée aux bornes du moteur, cette force contre-électromotrice étant alors traitée pour réguler la vitesse du moteur.

Lorsque ce procédé, mis en oeuvre dans un système régulateur de vitesse alimenté par une source de tension alternative, comprend une génération d'une tension bidirectionnelle variable par réglage d'un angle d'amorçage et un redressement double alternance de cette tension bidirectionnelle variable, on prévoit alors que le réglage de l'angle d'amorçage soit fonction de la force contre-électromotrice générée aux bornes du moteur dans les séquences d'annulation du courant d'induit.

Suivant encore un autre aspect de l'invention, il est proposé un moteur à excitation série comprenant un enroulement d'induit et au moins un enroulement d'excitation série, associé à un système de régulation de vitesse selon l'invention, caractérisé en ce que l'un au moins de ses enroulements d'excitation série est pourvu d'une diode de roue libre.

D'autres particularités et avantages de l'invention apparaîtront encore dans la description ci-après. Aux dessins annexés donnés à titre d'exemples non limitatifs:
- la figure 1 est un schéma d'un premier exemple de réalisation d'un régulateur de vitesse selon l'invention, à deux diodes de roue libre;
- la figure 2 est un schéma d'un second exemple de réalisation d'un régulateur de vitesse selon l'invention, à une seule diode de roue libre;
- la figure 3 est un schéma d'un troisième exemple de réalisation d'un régulateur de vitesse selon l'invention, à une seule diode de roue libre et avec un gain de régulation réglable;
- la figure 4 est un schéma d'un quatrième exemple de réalisation d'un régulateur de vitesse selon l'invention, pourvu d'un filtre CEM complet;
- la figure 5 est un schéma d'un cinquième exemple de réalisation d'un régulateur de vitesse selon l'invention, pourvu d'un filtre CEM simplifié;
- la figure 6 est un schéma d'un sixième exemple de réalisation d'un régulateur de vitesse selon l'invention, pourvu d'un système de freinage;
- la figure 7 est un chronogramme de formes d'ondes caractéristiques de tension et de courant observés avec le procédé de variation de vitesse selon l'invention; et
- la figure 8 est un schéma d'un septième exemple de réalisation d'un régulateur de vitesse selon l'invention avec un thyristor comme moyens variateurs.

On va maintenant décrire, en référence aux figures précitées, plusieurs formes de réalisation de régulateurs de vitesse en même temps que le procédé de variation de vitesse mis en oeuvre dans ces équipements.

Dans l'ensemble des figures précitées, les éléments et composants communs seront repérés par des références communes. En outre, des fonctions communes aux différents régulateurs décrits ci-dessous ne seront exposées qu'une seule fois dans la description qui va suivre.

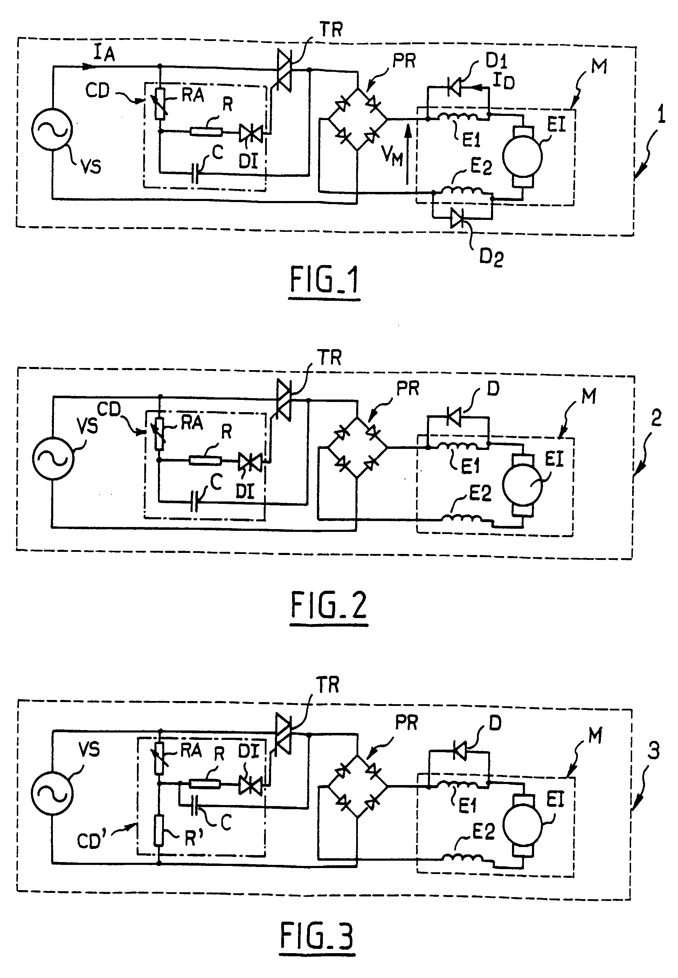

Un montage régulateur de vitesse 1 selon l'invention comprend, en référence à la figure 1, un triac TR disposé entre une source de tension alternative monophasée VS, par exemple 230 Vac, et l'entrée d'un pont redresseur PR dont la sortie est connectée aux bornes d'alimentation d'un moteur à excitation série M, par exemple un moteur universel.

Le moteur M comprend un enroulement d'induit E1 et deux enroulements d'excitation E1, E2 reliés en série avec l'enroulement d'induit E1 de part et d'autre de celui-ci.

A chaque enroulement série E1, E2, est reliée en parallèle une diode de roue libre D1, D2. Ces diodes sont orientées de manière à être bloquées lorsque le courant unidirectionnel circule dans l'induit et dans les enroulements E1, E2, et à être passantes lors de l'annulation du courant d'induit. Le triac TR est commandé par un circuit de déclenchement CD, de structure classique, comprenant un potentiomètre de réglage RA, un condensateur de charge C, et, entre, d'une part, le point de jonction du potentiomètre RA et du condensateur de charge C et, d'autre part, la gâchette du triac TR, une résistance de limitation R en série avec un diac DI.

A titre d'exemple pratique de réalisation, on peut utiliser un potentiomètre de réglage de 330 kΩ, une résistance de limitation de 47 Ω, et un condensateur de charge de 100 nF.

Les deux diodes de roues libre D1, D2 ont pour fonction de générer une force électromotrice significative durant les phases pendant lesquelles le moteur n'est pas alimenté par le courant secteur. Comme cette force électromotrice diminue avec la vitesse, on obtient une bonne régulation de vitesse sur toute la gamme de vitesse du moteur M.

Si l'on souhaite réduire le coût de réalisation du régulateur, on peut concevoir, en référence à la figure 2, un montage 2 dans lequel un seul enroulement d'excitation E1 du moteur M est pourvu d'une diode de roue libre D. On observe cependant une dégradation de la qualité de régulation par rapport au montage régulateur à deux diodes de roue libre.

La mise en oeuvre d'un circuit de déclenchement CD' de type série-parallèle au sein d'un montage régulateur 3 selon l'invention du type à une seule diode de roue libre, illustrée en figure 3, permet d'obtenir une régulation de vitesse supérieur à celle qui pourrait être obtenue avec un régulateur à thyristor classique. Ce circuit de déclenchement CD' comprend en outre une résistance parallèle R' placée, d'une part, entre le point de jonction du potentiomètre R et du condensateur de charge C, et d'autre part, une ligne d'alimentation secteur. On peut faire varier le gain de la régulation en agissant sur la valeur de cette résistance R' pour diminuer ou augmenter le coefficient de régulation.

A titre d'exemple pratique de réalisation du circuit de déclenchement CD', on peut utiliser une résistance parallèle de 420 kΩ et une résistance de limitation de 180 Ω.

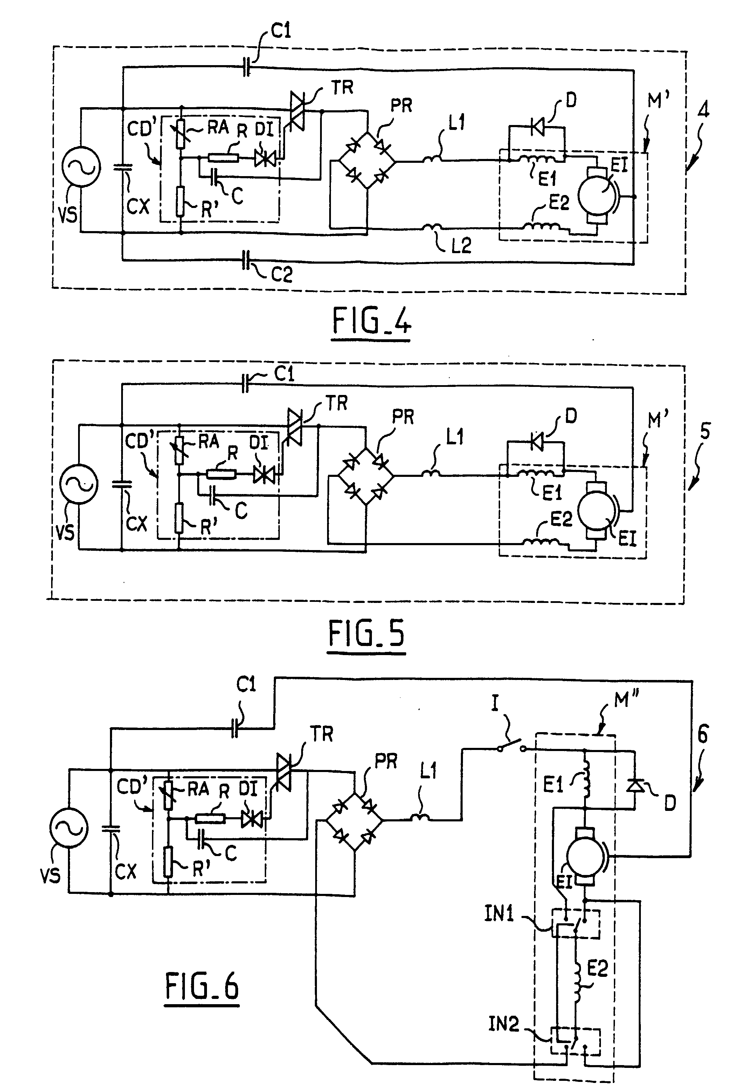

Pour satisfaire aux normes européennes de compatibilité électromagnétique, on munit un régulateur de vitesse 4 selon l'invention d'un système de filtrage de structure classique comprenant, en référence à la figure 4, un premier condensateur C1 relié en Y entre une première borne d'alimentation du montage et la carcasse du moteur M', un second condensateur C2 relié en Y entre la seconde borne d'alimentation du montage et la carcasse du moteur M', et un troisième condensateur CX relié en X en parallèle sur la source de tension d'alimentation VS. Par ailleurs, on dispose entre les bornes de sortie du pont redresseur PR et les bornes d'entrée du moteur M' une première et une seconde selfs de filtrage L1, L2 en série respectivement avec les premier et second enroulements d'excitation E1, E2.

Dans une forme de réalisation simplifiée illustrée par la figure 5, le montage régulateur de vitesse 5 selon l'invention est muni d'un système de filtrage comprenant un seul condensateur C1 relié en Y entre une première borne d'alimentation et la carcasse du moteur M', et une seule self de filtrage L1 entre le pont redresseur PR et l'enroulement d'excitation E1 pourvu de la diode de roue libre D.

A titre d'exemple pratique de réalisation du système de filtrage, on peut utiliser des condensateurs en Y de 6800 pF, un condensateur en X de 150 nF, et des selfs de filtrage de 7 µH.

Lorsque, pour certaines applications, une structure de freinage doit être prévue, notamment afin de satisfaire aux normes de sécurité, on peut alors concevoir un régulateur de vitesse 6 tel que représenté en figure 6, par exemple, avec une seule diode de roue libre D et un filtrage simplifié. Le moteur M" ainsi alimenté est pourvu d'un enroulement d'excitation E2 qui, au moyen de deux inverseurs IN1, IN2, peut être connecté soit dans une première situation "moteur", soit dans une seconde situation "frein".

En situation "moteur", l'enroulement d'excitation E2 est normalement connecté entre une borne de l'enroulement d'induit E1 du moteur M" et une borne de sortie du pont redresseur PR.

En situation "frein", l'enroulement d'excitation E2 est relié en parallèle sur l'enroulement d'induit, ce qui a pour effet de produire un couple électromagnétique négatif conduisant à un freinage du moteur M" jusqu'à l'arrêt.

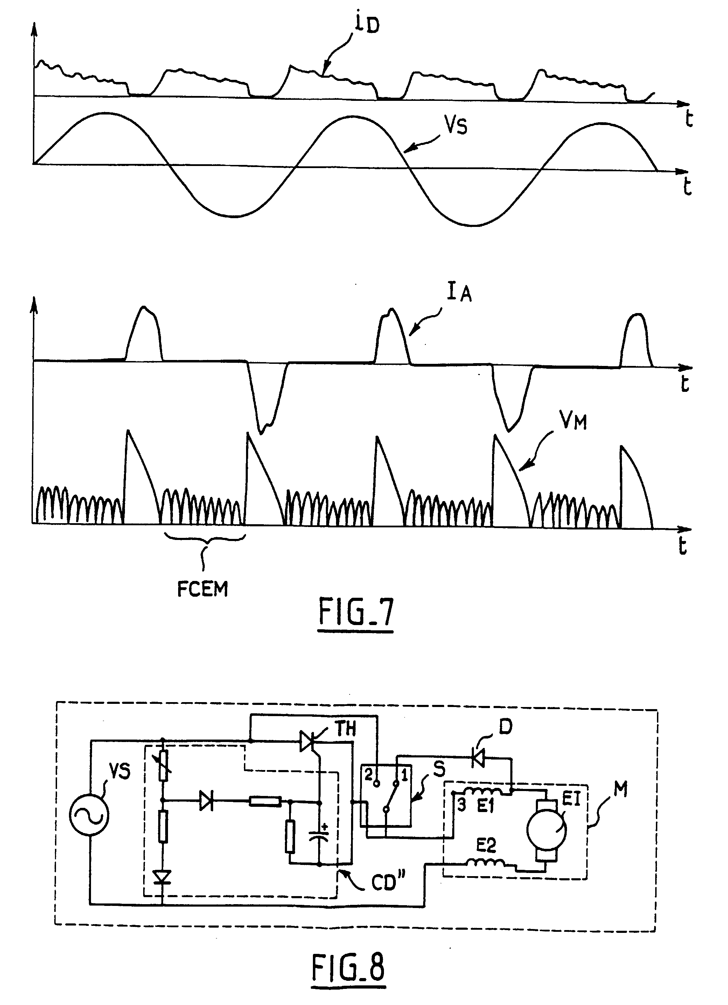

On va maintenant décrire le fonctionnement des régulateurs de vitesse selon l'invention, en référence notamment aux figures 1 et 7.

La combinaison du triac TR et du pont redresseur double alternance PR permet d'appliquer au moteur M, à partir de la tension d'alimentation alternative VS, une tension redressée de forme d'onde réglable. Le courant injecté dans le moteur M est unidirectionnel, tandis que le courant I_{A} délivré par l'alimentation est bidirectionnel.

Durant la conduction du triac TR, la tension v_{M} aux bornes du moteur M est sensiblement équivalente à la tension d'alimentation. Lorsque le courant d'alimentation IA s'annule, on observe l'apparition d'une force contre-électromotrice FCEM qui peut être de plusieurs dizaines de volts aux bornes du moteur M, du fait de la circulation d'un courant I_{D} dans les diodes de roue libre D1, D2 alors que le courant dans l'enroulement d'induit du moteur est nul. En effet, le courant ID circule dans les enroulements E1, E2 en créant un flux magnétique qui génère alors une force contre-électromotrice dans l'induit lorsque cet induit est en rotation.

La forme d'onde caractéristique de cette force contre-électromotrice comprend une série d'impulsions dues aux commutations successives du collecteur mécanique équipant le moteur M. Cette force contre-électromotrice apparaît également aux bornes d'entrée du pont redresseur double alternance PR, ce qui contribue à modifier la tension aux bornes du circuit de déclenchement CD. Ainsi, en situation de sur-vitesse par rapport à une vitesse de consigne déterminée par le réglage du potentiomètre RA, le montage régulateur 1 est agencé pour retarder l'amorçage du triac TR, tandis qu'en cas de sous-vitesse, il s'agit au contraire d'avancer l'amorçage du triac.

En situation de sur-vitesse, l'accroissement de la force contre-électromotrice présente en entrée du pont redresseur PR tend à diminuer la tension aux bornes du triac à l'état bloqué, ce qui a pour effet de retarder l'amorçage commandé par le circuit de déclenchement CD.

En situation de sous-vitesse, l'abaissement de la force contre-électromotrice présente en entrée du pont redresseur PR tend à augmenter la tension aux bornes du triac à l'état bloqué, ce qui a pour effet d'avancer l'amorçage commandé par le circuit de déclenchement CD.

On peut noter que si l'on dispose d'un régulateur électronique délivrant naturellement un courant unidirectionnel, le pont redresseur double alternance n'est alors plus nécessaire. A titre d'exemple et comme illustré à la figure 8, les moyens variateurs sont constitués par un interrupteur unidirectionnel du type thyristor TH commandé par des moyens de commande CD" adaptés pour déclencher le thyristor TH suivant un angle d'amorçage déterminé en fonction d'une consigne de vitesse et de l'amplitude de la force contre-électromotrice générée aux bornes du moteur M dans les séquences à courant nul. Selon cette variante de réalisation, une borne 3 de l'enroulement E1 est branchée, d'une part, au thyristor TH, et d'autre part, à un inverseur S qui peut prendre deux positions: soit une position 1 pour laquelle l'enroulement E1 et la diode D sont mis en parallèle, soit une position 2 pour laquelle l'enroulement E1 est déconnecté de la diode D et connecté en amont du thyristor TH à la source d'alimentation alternative VS. Cet inverseur S offre donc à l'utilisateur la possibilité de brancher directement le moteur M à la source d'alimentation VS en mettant l'inverseur en sa position 2.

Par ailleurs, tous les régulateurs qui exploitent la force contre-électromotrice hors alimentation des moteurs peuvent être utilisés dans le cadre de la présente invention, quelle que soit la source d'alimentation.

Bien sûr, l'invention n'est pas limitée aux exemples qui viennent d'être décrits et de nombreux aménagements peuvent être apportés à ces exemples sans sortir du cadre de l'invention. Elle peut notamment être appliquée à tout type de moteur à excitation série pouvant être alimenté par une tension unidirectionnelle, en particulier, des moteurs universels mais aussi des moteurs à courant continu à excitation série ou shunt.

## Revendications

1. Système (1-6) pour réguler la vitesse d'un moteur (M, M', M") à excitation série comportant un enroulement d'induit (E1) et au moins un enroulement d'excitation (E1, E2) en série avec cet enroulement d'induit (E1), comprenant des moyens variateurs de vitesse (TR, TH) pour délivrer une tension réglable aux bornes du moteur (M, M', M") et des moyens (CD, CD', CD") pour commander ces moyens variateurs (TR, TH), caractérisé en ce que les moyens variateurs de vitesse sont agencés pour générer un courant unidirectionnel réglable, et en que ce système régulateur comprend en outre au moins une diode de roue libre (D1, D2) reliée en parallèle sur l'un au moins des enroulements d'excitation (E1, E2) du moteur, les moyens de commande (CD, CD', CD") étant agencés pour traiter la force contre-électromotrice (FCEM) générée aux bornes du moteur (M, M', M") par la circulation d'un courant (ID) dans la diode de roue libre (D1, D2) pendant des séquences d'annulation du courant injecté dans l'enroulement d'induit (E1) du moteur (M, M', M").

2. Système régulateur de vitesse (1-6) selon la revendication 1, dont les moyens variateurs comprennent des moyens interrupteurs commandés (TR) en aval d'une source de tension alternative (VS) et des moyens de redressement double alternance (PR), caractérisé en ce que les moyens de commande (CD, CD') sont agencés pour déclencher les moyens interrupteurs commandés (TR) suivant un angle d'amorçage déterminé en fonction d'une consigne de vitesse et de l'amplitude de la force contre-électromotrice générée aux bornes du moteur (M, M', M") dans les séquences à courant nul.

3. Système régulateur de vitesse (1-6) selon la revendication 2, dont les moyens de commande (CD, CD') sont agencés pour générer une commande d'amorçage retardée en fonction d'une consigne de réglage de vitesse et de la tension aux bornes desdits moyens interrupteurs commandés (TR), caractérisé en ce que les moyens redresseurs (PR) sont agencés pour appliquer aux bornes desdits moyens interrupteurs commandés (TR) à l'état bloqué une tension sensiblement égale à la différence entre la tension d'alimentation (VS) et la force contre-électromotrice (FCEM) générée aux bornes du moteur (M, M', M").

4. Système régulateur de vitesse (3-6) selon la revendication 3, caractérisé en ce que les moyens de commande (CD') comprennent en outre des moyens (RA, R') pour régler le gain de régulation de la vitesse du moteur (M, M').

5. Système régulateur de vitesse (4-6) selon l'une quelconque des revendications précédentes, caractérisé en ce qu'il est associé à des moyens de filtrage CEM (C1, C2, CX, L1, L2).

6. Système régulateur de vitesse (6) selon l'une quelconque des revendications précédentes, caractérisé en ce qu'il comprend en outre des moyens (IN1, IN2) pour connecter l'un des enroulements d'excitation (E1, E2), soit dans un premier état "moteur" dans lequel ledit enroulement d'excitation (E2) est normalement connecté en série avec l'enroulement d'induit (E1) du moteur (M"), soit dans un second état "frein" dans lequel ledit enroulement d'excitation (E2) est connecté en parallèle sur l'enroulement d'induit (E1) du moteur (M") qui est alors déconnecté des moyens redresseurs (PR).

7. Procédé pour réguler la vitesse d'un moteur à excitation série (M, M', M") comportant un enroulement d'induit (E1) et au moins un enroulement d'excitation (E1, E2) en série avec cet enroulement d'induit (E1), ce moteur (M, M', M") étant alimenté par un courant unidirectionnel réglable avec des séquences à courant nul, mis en oeuvre dans le système régulateur de vitesse (1-6) selon l'une quelconque des revendications précédentes, caractérisé en ce que, lors de chaque annulation du courant dans l'enroulement d'induit (E1) du moteur (M, M', M"), l'un au moins des enroulements d'excitation (E1, E2) est mis en court-circuit de sorte qu'une force contre-électromotrice (FCEM) est générée aux bornes du moteur (M, M', M"), cette force contre-électromotrice (FCEM) étant alors traitée pour réguler la vitesse du moteur (M, M', M").

8. Procédé selon la revendication 7, mis en oeuvre dans un système régulateur de vitesse (1-6) alimenté par une source de tension alternative (VS), comprenant une génération d'une tension bidirectionnelle variable par réglage d'un angle d'amorçage et un redressement double alternance de cette tension bidirectionnelle variable, caractérisé en ce que le réglage de l'angle d'amorçage est fonction de la force contre-électromotrice (FCEM) générée aux bornes du moteur (M, M', M") dans les séquences d'annulation du courant d'induit.

9. Procédé selon la revendication 8, caractérisé en ce qu'il comprend en outre un réglage du gain de la régulation de vitesse du moteur (M, M', M").

10. Moteur à excitation série (M, M', M") comprenant un enroulement d'induit (E1) et au moins un enroulement d'excitation série (E1, E2), associé à un système de régulation de vitesse (1-6) selon l'une quelconque des revendications 1 à 6, caractérisé en ce que l'un au moins de ses enroulements d'excitation série (E1, E2) est pourvu d'une diode de roue libre (D1, D2).
